## Europäisches Patentamt

## European Patent Office

## Office européen des brevets

(11) Veröffentlichungsnummer: **0 176 721**
**B1**

(12) **EUROPÄISCHE PATENTSCHRIFT**

(45) Veröffentlichungstag der Patentschrift:
**08.11.89**

(21) Anmeldenummer: **85110283.0**

(22) Anmeldetag: **16.08.85**

(51) Int. Cl.⁴: **B 32 B 5/18,** B 32 B 15/14,
B 32 B 27/12, F 16 L 59/02

(54) **Isoliermaterial.**

(30) Priorität: **04.09.84 DE 8426114 U**

(43) Veröffentlichungstag der Anmeldung:
**09.04.86 Patentblatt 86/15**

(45) Bekanntmachung des Hinweises auf die Patenterteilung:
**08.11.89 Patentblatt 89/45**

(84) Benannte Vertragsstaaten:
**AT BE CH FR IT LI LU NL**

(56) Entgegenhaltungen:
**DE-B- 1 035 886
DE-U- 8 121 378
GB-A- 955 960**

(73) Patentinhaber: **E. Missel GmbH & Co.,
Hortensienweg 2 und 21, D-7000 Stuttgart 50 (DE)**

(72) Erfinder: **Ruoff-Schäfer, Rudolf,
Endersbacherstrasse 51, D-7000 Stuttgart 50 (DE)**

(74) Vertreter: **Dipl.-Phys.Dr. Manitz Dipl.-Ing., Dipl.-W.-Ing.
Finsterwald Dipl.-Ing. Grämkow Dipl.-Chem.Dr. Heyn
Dipl.-Phys. Rotermund, Morgan, B.Sc.(Phys.)
Robert-Koch-Strasse 1, D-8000 München 22 (DE)**

ACTORUM AG

## Beschreibung

Die Erfindung betrifft ein Isoliermaterial in Rohr- oder Streifenform bestehend aus mindestens einer feuchtigkeitsundurchlässigen Außenschicht und wenigstens einer Faserschicht, die mit der Außenschicht zu einem Verbund zusammengefaßt ist.

Insbesondere für Rohrleitungen bestimmte Isoliermaterialien aus Schaumstoff sind bekannt, und es ist auch bekannt, derartige Schaumstoff-Isoliermaterialien außenseitig mit Folien zu kaschieren, um die äußere Oberfläche des vergleichsweise empfindlichen Schaumstoffmaterials vor Beschädigungen zu schützen.

Dem Schutz vor Beschädigungen des Isoliermaterials kommt in der Praxis erhebliche Bedeutung zu, da zur Gewährleistung einer einwandfreien Langzeit-Isolierwirkung sichergestellt sein muß, daß trotz des rauhen Betriebs auf Baustellen Beschädigungen des Isoliermaterials, die dann später zu einem Eindringen von Feuchtigkeit führen können, mit größtmöglicher Sicherheit vermieden werden.

Ein Isoliermaterial der eingangs angegebenen Art ist aus der GB-A-955 960 bekannt, und bei diesem Isoliermaterial ist die Außenschicht zumindest bereichsweise mit einem Klebstoff versehen, welcher mit einer Deckschicht abgedeckt ist. Auf der Außenschicht ist als eigentliches Dämmaterial stets nur eine einzige Schicht aus einem bestimmten Material angeordnet, wobei als mögliche Dämmaterialien Vlies, Kork, Filz, Gewebematerialien und auch geschlossenzellige Schaumstoffe Verwendung finden können.

Aufgabe der Erfindung ist es, ein Isoliermaterial der eingangs angeführten Art zu schaffen, das sich trotz eines einfachen und wirtschaftlich zu realisierenden Aufbaus durch besonders gute Isolier- und Festigkeitseigenschaften auszeichnet.

Gelöst wird diese Aufgabe dadurch, daß die Außenschicht aus einer Kunststoffolie besteht und daß die Faserschicht zwischen der Kunststoffolie und einer Schaumstoffolie aus geschlossenzelligem Schaumstoff angeordnet ist.

Diese verschiedenen Schichten wirken nicht nur funktionell hinsichtlich der geforderten Dämmung und hinsichtlich es zu fordernden Schutzes für das zu dämmende Gebilde optimal zusammen, sondern es ergeben sich auch bei der Verarbeitung dieses Isoliermaterials, und zwar sowohl in Rohrform als auch in Streifenform, wesentliche Vorteile.

Die Eigenschaften der verschiedenen Bestandteile des Verbundes ergänzen sich hinsichtlich der bei Dämmaufgaben bestehenden Forderungen in optimaler Weise, wobei auch von Bedeutung ist, daß die die Festigkeitseigenschaften des Verbunds maßgeblich beeinflussende Faserschicht völlig geschützt, insbesondere gegen Feuchtigkeit geschützt zwischen der Kunststoffolie und dem geschlossenzelligen Schaumstoff angeordnet ist und damit auch eine hohe Dauerbeständigkeit des Verbundes sichergestellt wird.

Die mit dem zu dem dämmenden Gegenstand unmittelbar in Berührung kommende Schicht aus geschlossenzelligem Schaumstoff erweist sich gerade aufgrund ihrer Abstützung auf und ihrer Verbindung mit der Faserschicht bei der jeweiligen Montage als besonders widerstandsfähig, d. h. es treten die sonst häufig zu beobachtenden Beschädigungen an Übergangsbereichen zwischen Rohren und Armaturen an der Schaumstoffschicht nicht auf, da sich der Verbund aus geschlossenzelligem Schaumstoff und Faserschicht überraschend geschmeidig und dennoch äußerst widerstandsfähig verhält.

Von besonderem Vorteil ist es, als Fasermaterial Wirrfaservlies, insbesondere Nadelvlies einzusetzen, da genadelte Faserschichten besonders hohe Reißfestigkeit bei gleichzeitig großer Durchstoßfestigkeit aufweisen. Beide Eigenschaften kommen bei einem Verbund, bestehend aus geschlossenzelligem Schaumstoff, genadelter Faserschicht und Außenfolie, besonders zur Wirkung.

Das beschriebene Isoliermaterial eignet sich ausgezeichnet als Rohrdämmung für kalt- und warmgehende Rohrleitungen, kann jedoch auch in Platten- und/oder Streifenform zum Einsatz kommen.

Die feuchtigkeitsundurchlässige Außenschicht kann auch aus einem auf die Faserschicht aufgetragenen Kunststoffilm bestehen.

Um sicherzustellen, daß die Faserschicht auch von der Innenseite des Isoliermaterials her nicht in unerwünschter Weise mit Feuchtigkeit beaufschlagt werden kann, ist nach einer Ausführungsvariante vorgesehen, daß diese Faserschicht an ihrer von der feuchtigkeitsundurchlässigen Außenschicht abgewandten Seite mit einer weiteren feuchtigkeitssperrenden Deckschicht verbunden ist, die vorzugsweise wieder aus einer Folie besteht.

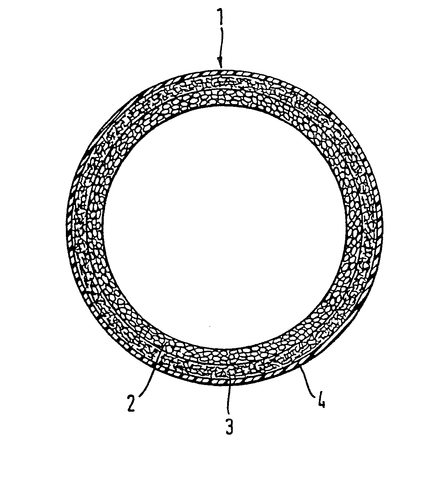

Ein Beispiel eines gemäß der Erfindung ausgebildeten Isoliermaterials ist in der Zeichnung dargestellt, deren einzige Figur eine Querschnittsansicht einer Rohrdämmung zeigt.

Nach der Zeichnung setzt sich der das Isoliermaterial bildende Verbund 1 zusammen aus einer Schicht 2 eines geschlossenzelligen Schaumstoffs, einer mit dieser Schicht 2 fest verbundenen, insbesondere verklebten oder verschweißten Faserschicht 3 und einer die Faserschicht 3 umschließenden Kunststoffolie bzw. Folienbeschichtung 4.

Die Faserschicht wird dabei insbesondere von einem Nadelvlies gebildet, wobei die in Radialrichtung gemessene Stärke von Schaumstoffschichten 2 und Nadelvlies 3 beispielsweise etwa gleich groß sein können. Dies stellt jedoch keinerlei einschränkende Bedingung dar.

Das in dieser Weise aufgebaute Isoliermaterial läßt sich in der Praxis besonders gut handhaben, da der geschlossenzellige Schaumstoff sicherstellt, daß auch im Falle des Aufschiebens des Isolierschlauchs auf ein Rohr keine Schwierigkeiten entstehen.

## Patentansprüche

1. Isoliermaterial in Rohr- und Streifenform, bestehend aus mindestens einer feuchtigkeitsundurchlässigen Außenschicht (4) und wenigstens einer Faserschicht (3), die mit der Außenschicht (4) zu einem Verbund (1) zusammengefaßt ist, dadurch gekennzeichnet, daß die Außenschicht (4) aus einer Kunststoffolie besteht und daß die Faserschicht (3) zwischen der Kunststoffolie und einer Schaumstoffschicht (2) aus geschlossenzelligem Schaumstoff angeordnet ist.

2. Isoliermaterial nach Anspruch 1, dadurch gekennzeichnet, daß die Schaumstoffschicht (2) die jeweils innenliegende Schicht des Verbunds (1) bildet.

3. Isoliermaterial nach Anspruch 1 oder 2, dadurch gekennzeichnet, daß die Außenschicht (4) aus einem auf die Faserschicht (3) aufgetragenen Kunststoffilm besteht.

4. Isoliermaterial nach einem der vorhergehenden Ansprüche, dadurch gekennzeichnet, daß die Faserschicht (3) an ihrer von der feuchtigkeitsundurchlässigen Schicht (4) abgewandten Seite mit einer weiteren feuchtigkeitssperrenden Deckschicht verbunden ist.

5. Isoliermaterial nach Anspruch 4, dadurch gekennzeichnet, daß die Deckschicht aus einer Folie besteht.

6. Isoliermaterial nach einem der vorhergehenden Ansprüche, dadurch gekennzeichnet, daß die Faserschicht (3) aus einem Wirrfaser- oder Nadelvlies besteht und daß die Dicke der Faserschicht (3) etwa im Bereich der Dicke der Schaumstoffschicht (2) gelegen ist.

## Claims

1. Insulating material in tubular and strip form comprising at least one moisture impermeable outer layer (4) and at least one fiber layer (3) which is combined with the outer layer (4) into a composite structure (1), characterized in that the outer layer (4) comprises a plastic foil and in that the fiber layer (3) is arranged between the plastic foil and a foam layer (2) of closed cell foam material.

2. Insulating material in accordance with claim 1, characterized in that the layer of foam material (2) forms the respective inwardly disposed layer of the composite structure (1).

3. Insulating material in accordance with claim 1 or claim 2, characterized in that the outer layer (4) comprises a plastic film which is applied onto the fiber layer (3).

4. Insulating material in accordance with one of the preceding claims, characterized in that the fiber layer (3) is connected at its side remote from the moisture impermeable layer (4) with a further moisture blocking cover layer.

5. Insulating material in accordance with claim 4, characterized in that the cover layer consists of a foil.

6. Insulating material in accordance with one of the preceding claims, characterized in that the fiber layer (3) consist of a random fiber fleece (felt) or a needle fleece (felt) and in that the thickness of the fiber layer (3) lies approximately in the range of the thickness of the foam material layer (2).

## Revendications

1. Matériau isolant sous forme de tubes et de bandes, consistant en du moins une couche extérieure (4) étanche à l'humidité et du moins une couche de fibres (3), qui est réunie en un composé (1) avec la couche extérieure (4), caractérisé en ce que la couche extérieure (4) consiste en une feuille de matière synthétique et que la couche de fibres (3) est disposée entre la feuille de matière synthétique et une couche de matière plastique mousse (2) à cellules fermées.

2. Matériau isolant selon la revendication 1, caractérisé en ce que la couche de matière plastique mousse (2) forme toujours la couche intérieure du composé (1).

3. Matériau isolant selon la revendication 1 ou 2, caractérisé en ce que la couche extérieure (4) consiste en un film de matière synthétique appliqué à la couche de fibres (3).

4. Matériau isolant selon l'une des revendications précédentes, caractérisé en ce que le côté détourné de la couche étanche à l'humidité (4) de la couche de fibres (3) est relié à une autre couche de revêtement étanche à l'humidité.

5. Matériau isolant selon la revendication 4, caractérisé en ce que la couche de revêtement consiste en une feuille.

6. Matériau isolant selon l'une des revendications précédentes, caractérisé en ce que la couche de fibres (3) consiste en un voile de fibres emmêlées ou en un voile aiguilleté et que l'épaisseur de la couche de fibres (3) est environ identique à l'épaisseur de la couche de matière plastique mousse (2).